Europäisches Patentamt

European Patent Office

Office européen des brevets

(19)

(11) Veröffentlichungsnummer: **0 167 486**

**A1**

(12) # EUROPÄISCHE PATENTANMELDUNG

(21) Anmeldenummer: 85810264.3

(22) Anmeldetag: **10.06.85**

(51) Int. Cl.⁴: **B 32 B 27/00**
**C 08 J 11/04**

(30) Priorität: 09.07.84 CH 3335/84
15.06.84 CH 2909/84

(43) Veröffentlichungstag der Anmeldung:
08.01.86 Patentblatt 86/2

(84) Benannte Vertragsstaaten:
AT BE CH DE FR GB IT LI LU NL SE

(71) Anmelder: Winner, Eduard
Weierstrasse 3
CH-9500 Wil(CH)

(72) Erfinder: Winner, Eduard
Weierstrasse 3
CH-9500 Wil(CH)

(74) Vertreter: Gachnang, Hans Rudolf
Algisserstrasse 33
CH-8500 Frauenfeld(CH)

(54) **Mehrschichtkörper aus Kunststoff.**

(57) Der erfindungsgemässe Mehrschichtkörper weist mindestens eine Schicht (1) aus ungereinigten, unsortierten, petrochemischen Produkten (2) auf. Als weitere Schichten (4) können ebenfalls das gleiche Produkt (2) oder das Produkt (2) mit einer Armierung oder mit Füllstoff angebracht sein, welche durch Verpressen oder Sinterung miteinander verbunden werden. Die Mehrschichtkörper lassen sich als Ersatz für Holz als Bauhilfsmaterial für Schalungen, als Wandelemente, Bedachungselemente oder als Eisenbahnschwellen sowie für beliebige weitere Zwecke einsetzen.

FIG. 3

Mehrschichtkörper aus Kunststoff

Die Erfindung betrifft einen Mehrschichtkörper aus Kunststoff.

Die Erfindung betrifft weiter die Herstellung eines Mehrschichtkörpers sowie die Verwendung eines Mehrschichtkörpers.

Aus der DE-OS 30 24 552 ist es bekannt, Gemische von thermo- und duroplastischen Produkten, allgemein petrochemischen Produkten, unterschiedlicher Schmelzbereiche, Meltindices und Viskositäten zu einem homogenen neuen Produkt zu polymerisieren. Diese durch Homogenisieren, Plastifizieren und/oder thermisches Verbinden entstandenen Produkte liegen vor deren Weiterverarbeitung als Granulat oder als Pulver vor und fanden vorwiegend Verwendung als Teppichrückenbeschichtungen.

Es ist Aufgabe der vorliegenden Erfindung, für das mittels des bekannten Verfahrens aus ungereinigten unsortierten synthetischen Faser- und/oder Kunststoffprodukten gewonnene Produkt weitere Verwendungszwecke zu suchen. Insbesondere besteht die Aufgabe der Erfindung darin, das gewonnene Produkt als vollwertigen Ersatz für Produkte einzusetzen, welche bisher nur aus reinen Stoffen hergestellt werden konnten.

Die Aufgabe der Erfindung besteht weiter auch darin,
Wege für die Herstellung der Produkte aufzuzeigen.

Diese Aufgaben werden nach der Erfindung gemäss den kennzeichnenden Merkmalen der Patentansprüche gelöst.

Ueberraschenderweise weisen die aus ungereinigten unsortierten synthetischen Faser- und/oder Kunststoffprodukten
hergestellten Mehrschichtkörper ausserordentlich gute
Eigenschaften bezüglich Festigkeit, Homogenität, Unempfindlichkeit gegen Feuchtigkeit, usw. auf. Im Gegensatz
zu reinen Kunststoffplatten können in die erfindungsgemässen Körper auch Nägel eingeschlagen werden, wie dies
bisher nur in Holz möglich gewesen ist.

Weitere vorteilhafte Ausbildungsformen der Erfindungen
sind in den abhängigen Ansprüchen beschrieben.

Durch die Einlage einer Armierung in/oder zwischen die
einzelnen Schichten kann die Festigkeit der Schichtkörper
den an diese gestellten Anforderungen angepasst werden.
Durch die Beigabe von Füllmaterialien in einer oder in
mehreren Schichten können die physikalischen Eigenschaften der Schichtkörper bezüglich Festigkeit, spezifisches
Gewicht und thermischer Leitfähigkeit, etc. beliebig verändert werden.

0167486

Anhand von illustrierten Ausführungsbeispielen wird die Erfindung näher erläutert. Es zeigen:

Figur 1    einen Querschnitt durch einen Schichtkörper mit aussenliegender Armierung,

Figur 2 und 3   je einen Querschnitt durch einen Mehrschichtkörper,

Figur 4    einen Querschnitt durch einen Schichtkörper mit einem eingebetteten Verankerungsteil,

Figur 5    einen Querschnitt durch eine Schalungsplatte mit einem Stahlrahmen.

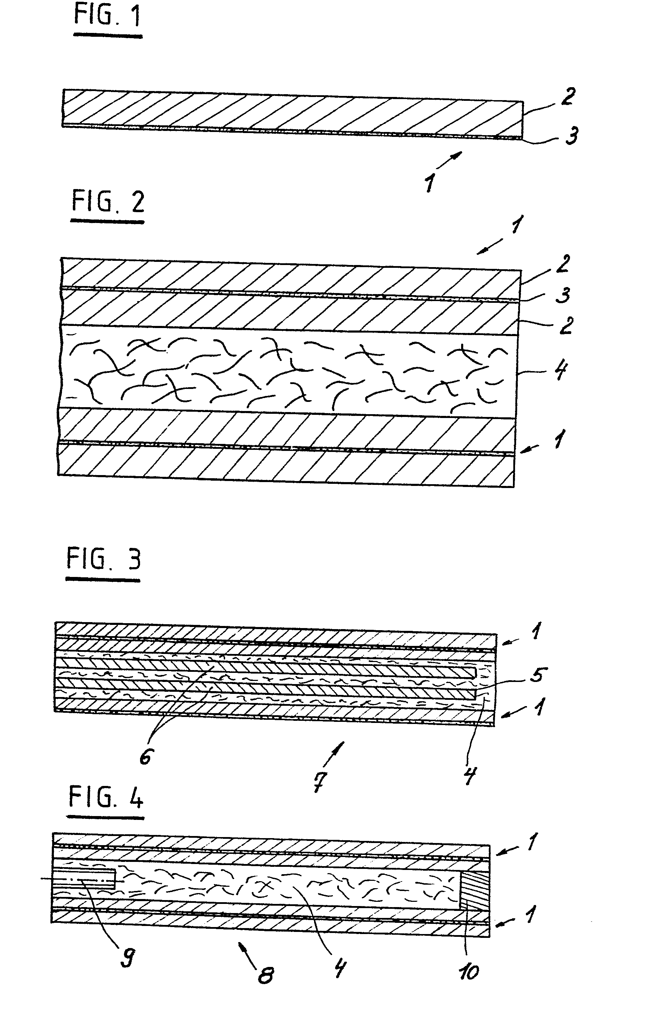

In Figur 1 ist der Querschnitt durch einen plattenförmigen Körper 1 gezeigt, der aus Pulvergranulat aus ungereinigten, unsortierten synthetischen Faser- und/oder Kunststoffprodukten 2 hergestellt ist und einem Trägermaterial 3, z.B. Vlies, Gewebe, Folie, etc. besteht. Der plattenförmige Körper 1 kann auf einer Anlage gemäss DE-OS 29 11 648 hergestellt sein. Anstelle einer einseitigen Beschichtung des Körpers 1 kann dieser auch beidseitig des Trägermaterials 3 mit dem Produkt 2 beschichtet sein. Als billiges Träger- oder Armierungsmaterial 3 kann auch Jute verwendet werden (Figur 2).

In der Figur 2 ist zwischen zwei Körpern 1 eine Zwischenschicht 4, bestehend aus dem gleichen Mischprodukt 2 oder aus dem Mischprodukt 2 unter Zusatz von Füll- oder Armierungsmaterialien wie Holzspäne, Sägemehl,u.a. oder Fasern aus Kunststoff oder Metall. Die Zwischenschicht kann auch aus Holz, einer Span - oder Sperrholzplatte oder einer Metallplatte 6 bestehen. Bei der Verwendung von Platten als Zwischenschicht 4 werden diese vorzugsweise längs deren Kanten 5 in das Produkt 2 eingebettet, d.h. die Kanten 5 der Platten 6 sind gegenüber dem plattenförmigen Körper 1 zurückversetzt eingelegt.

Anstelle einer einzigen Zwischenschicht 4 können selbstverständlich auch zwei oder mehr solcher Schichten aus gleichen oder aus unterschiedlichen Materialien zusammengefügt sein.

Im Beispiel nach Figur 3 ist ein Mehrschichtkörper 7 dargestellt, wie er als Ersatz für die bisher gebräuchlichen Schichtholzschalungsplatten zum Herstellen von Betonschalungen Verwendung findet.

Die aussenliegenden Körper 1 bestehen wiederum aus dem Produkt 2, welches auch als Multicompoundprodukt bezeichnet werden kann und das auf einem Trägermaterial 3, z.B. Vliesstoff, aufgebracht ist. Zwischen den beiden Körpern 1 sind zwei Schichten aus Sperrholz 6 und dazwischen ist wiederum ein Körper 1 aus dem Produkt 2 eingefügt. Für höhere Belastungen kann selbstverständlich die Zahl der Schichten erhöht werden. Anstelle der Sperrholzschichten 6 kann auch nur das Produkt 2 mit oder ohne Armierung als Füllstoff vorgesehen werden.

Längs der Kanten 5 sind die Sperrholzplatten 6 in das Produkt 2 eingebettet und folglich gegen Feuchtigkeit 100%ig geschützt.

In Figur 4 ist ein aus mehreren Schichten 1, 4 aufgebautes Element 8 dargestellt, in welches eine Gewindehülse 9 und eine Kantenverstärkung 10 aus Metall eingebettet sind.

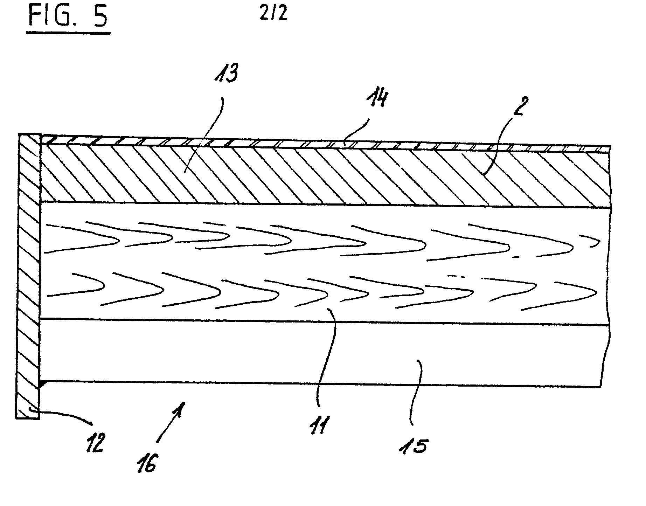

In der Figur 5 ist nur eine Schicht 13 des Produktes 2 auf eine aus Holz bestehende Platte 11, welche in einen Stahlrahmen 12 einer Schalungsplatte 16 eingelegt ist, aufgetragen und mit der Platte 11 verklebt. Zum Schutz gegen mechanische und thermische Einflüsse kann die Oberfläche der Schicht 13 mit einem Vlies oder Gewebe 14 abgedeckt sein.

Der Stahlrahmen 12 samt den Verstrebungen 15 auf der Rückseite der Platte 11 kann ebenfalls mit einer Schicht des Produktes 2 bedeckt sein.

Die Beschichtung von Schalungsplatten 16 eignet sich besonders bei der Erneuerung von defekten Holzplatten 11. Anstelle eines Ersatzes der Holzplatte 11 wird diese gereinigt, z.B. durch Sandstrahlen, und anschliessend mit dem Produkt 2 beschichtet. Gleichzeitig kann auch der Stahlrahmen 12 durch das Produkt 2 geschützt werden, sofern dieses, wie weiter hinter beschrieben werden wird, mit einem Bindmittel abgebunden wird. Eine auf diese Weise beschichtete Holzplatte 11 versieht ihren Dienst weiterhin wie eine neue Platte 11. Ein als äussere Schutzschicht aufgelegtes Vies oder Gewebe 14 kann mit einem Duroplasten beschichtet sein, welcher die Oberfläche der Platte 16 noch temperaturbeständiger macht. Eine Beschichtung mit Teflon ergibt beste Antihafteigenschaften, so dass keine weiteren Trennmittel mehr erforderlich sind.

Die Herstellung der Schichtkörper kann durch Sinterung von Produkt 2 oder verschiedenartigen Produkten 2 oder durch Einbringen und Pressen von in plastischer Phase befindlichem Produkt 2 oder Produkten 2 zwischen jeweils zwei plattenförmigen Körpern 1 erfolgen.

Anstelle der thermischen Verbindung des Produktes 2 zu einem festen Körper kann dem pulverförmigen oder als Granulat vorliegenden Produkt 2 ein Bindemittel beigegeben werden, welches bereits bei Raumtemperatur aushärtet. Beispielsweise kann das Bindemittel ein Zweikomponentenkleber auf der Basis von Epoxid sein, wobei als Härter ein Polyamid gewählt werden kann. Je nach dem wie später der Schichtkörper verwendet wird, kann selbstverständlich auch ein anderes Bindemittel für das Produkt 2, bespielsweise ein Zweikomponenten Polyisozianat eingesetzt werden.

Bei Verwendung eines Bindemittels entfällt natürlich der Erhitzungsvorgang und allenfalls auch das Pressen, so dass die Herstellungszeit bzw. die Verweilzeit in der Produktionsmaschine wesentlich verkürzt werden kann.

Für die Erzeugung von sehr dicken Gegenständen aus dem Produkt 2, z.B. Eisenbahnschwellen, müssen selbstverständlich eine grössere Anzahl von Schichten vorgesehen werden als dies für Schalungsplatten nötig ist. Als Armierung eignet sich neben Armierungsstahl auch in das Produkt 2 eingebetteter Autoschrott, wie dieser aus den Shreddern der Autoverwerter ungereinigt anfällt.

Es können auch an den besonders beanspruchten Stellen der Platten, z.B. Verstärkungskanten aus Stahl, Gewinderohre und andere Verankerungselemente miteingegossen werden.

Bei der Verwendung der Körper 1 als Bedachungselemente (Ziegel- oder Eternitschieferersatz) wird vorzugsweise

- 8 -                    0167486

ein Trägermaterial (Vlies oder Gewebe) mit hoher Festigkeit und UV-Beständigkeit verwendet.

Vorzugsweise werden den Bedachungselementen Sand oder mineralische Faserprodukte beigemischt, um eine Antiflammeigenschaft und -resistenz sowie eine hohes spezifisches Gewicht zu erhalten.

Werden die Körper 1 zu Sandwich-Fertig-Bauelementen verarbeitet, so können als Zwischenschichten Steinwolle oder Glasfaser-Abfallprodukte verwendet werden.

Als Ausgangsmaterialien für die Produkte 2 kommen im wesentlichen alle anfallenden Synthetikfasern und andere synthetische Produkte, allgemein petrochemische Produkte in Frage. Es können bis 30% nicht-synthetische Produkte vorhanden sein. Das aus diesen Polymeren hergestellte Produkt 2 weist beispielsweise eine der nachfolgenden Zusammensetzungen oder eine Kombination von zwei oder mehreren der nachfolgenden Zusammensetzungen auf:

Beispiel 1     40 %   Polyamide 6.6

               40 %   Polypropylen

               10 %   Viscose 10 %   Hochdruck-Polyäthylen


Beispiel 2     80 %   Polypropylen 20 %   Polyamide 6.6

0167486

Beispiel 3     90 % Polypropylen 10 % Viscose

Beispiel 4     10 % Polypropylen 60 % Polyamide 6.6, Polyamide 6 und Polyester

               30 % Budadienstyrol

Beispiel 5     20 % Polypropylen 60 % Polyamide 6.6 20 % Hochdruck-Polyäthylen

Beispiel 6     50 % Polypropylen 50 % Polyester

Beispiel 7     10 % Viscose 70 % Polyester

               20 % Polymaide 6.6

Beispiel 8     40 % Polyamide 6.6

               40 % Polypropylen

               10 % Viscose 10 % Hochdruck-Polyäthylen

Beispiel 9     60 % Polypropylen 20 % Polyamide 6.6

               20 % Hochdruck-Polyäthylen-Beschichtung

Beispiel 10     90 % Polypropylen 10 % Hochdruck-Polyäthylen

Beispiel 11     50 % Polyamide 6.6 50 % Polypropylen

Beispiel 12     50 % Polyamide 6.6

                30 % Polypropylen

                10 % Viscose 10 % Hochdruck-Polyäthylen

Beispiel 13     70 % Polypropylen 20 % Polyamide 6.6 10 % Hochdruck-Polyäthylen

Beispiel 14     80 % Polypropylen 20 % Hochdruck-Polyäthylen

Beispiel 15     10 % Polypropylen 30 % Polyester

                30 % Polyamide 6.6 30 % Hochdruck-Polyäthylen

Beispiel 16     70 % Polypropylen 30 % Polyamide 6.6

Beispiel 17      10 % Polyester 45 % Polyamide 6.6 45 % Polypropylen


Beispiel 18      50 % Polyamide 6.6

20 % Polypropylen

10 % Viscose 20 % Hochdruck-Polyäthylen


Beispiel 19      60 % Polypropylen 30 % Polyamide 6.6 10 % Hochdruck-Polyäthylen


Beispiel 20      50 % Polypropylen 40 % Polyamide 6.6 10 % Hochdruck-Polyäthylen


Den Produkten 2 aus einem oder mehreren der oben beispielsweise angeführten Zusammensetzungen (1 bis 20) kann
zusätzlich eine oder auch mehrere weitere Komponenten
z.B. ungereinigte, modifizierte Phenol- und Epoxidharze,
in einem prozentual höheren Anteil zugegeben werden, um
die Eigenschaften des Endproduktes dem späteren Verwendungszweck anzupassen. Selbstverständlich muss auch diese
zugefügte Komponente nicht als reines Material vorliegen,
sondern kann vorteilhafterweise ebenfalls ein ungereinigtes Abfallprodukt sein, das überwiegend aus der gewünschten Komponente besteht.

Patentaransprüche

1. Mehrschichtkörper aus Kunststoff, dadurch gekennzeichnet, dass mindestens eine Schicht (1) aus ungereinigten, unsortieren petrochemischen Produkten (2) besteht.

2. Mehrschichtkörper nach Anspruch 1, dadurch gekennzeichnet, dass die petrochemischen Produkte (2) repolymerisiert sind.

3. Mehrschichtkörper nach Anspruch 2, dadurch gekennzeichnet, dass zwischen den Schichten (1,4) eine Armierung (3) aus einem Vlies, einem Gewebe und/oder einem Gitter besteht.

4. Mehrschichtkörper nach Anspruch 2, dadurch gekennzeichnet, dass die Armierung (3) aus Holz besteht.

5. Mehrschichtkörper nach Anspruch 2, dadurch gekennzeichnet, dass die Armierung (3) in der Kunststoffschicht (1) eingebettet ist.

6. Mehrschichtkörper nach einem der vorangehenden Ansprüche, dadurch gekennzeichnet, dass einer der Schichten (1,4) ein Füllmaterial beigefügt ist.

- 13 -

0167486

7. Mehrschichtkörper nach Anspruch 6, dadurch gekennzeichnet, dass als Füllmaterial Holzspäne, Sand, Schrott oder Fasern verwendet werden.

8. Mehrschichtkörper nach einem der vorangehenden Ansprüche, dadurch gekennzeichnet, dass zwischen zwei Schichten (1) aus ungereinigten, unsortierten petrochemischen Produkten eine Schicht (4) aus reinem Material (6) eingesetzt ist.

9. Mehrschichtkörper nach Anspruch 8, dadurch gekennzeichnet, dass die Schicht (4) aus einem Isoliermaterial, aus einem mineralischen Stoff wie Steinwolle, Glasfaser oder Steinwolle- oder Glasfaserabfallprodukten oder einem Gemisch aus dem Produkt (2) und Steinwolle oder Glasfaser besteht.

10. Mehrschichtkörper nach einem der vorangehenden Ansprüche, dadurch gekennzeichnet, dass dem Produkt (2) zusätzlich ungereinigte oder reine modifizierte Phenol- oder Epoxidharze beigefügt werden.

11. Mehrschichtkörper aus Kunststoff, dadurch gekennzeichnet, dass eine Schicht repolimerisierte ungereinigte und unsortierte petrochemische Produkte enthält, welche als Pulver oder Granulat vorliegenden Produkte (2) durch ein Bindmittel gegenseitig gebunden sind.

12. Mehrschichtkörper nach Anspruch 11, **dadurch** gekennzeichnet, dass das Bindmittel ein **Zweikomponenten**kleber ist.

13. Mehrschichtkörper nach Anspruch 11, **dadurch** gekennzeichnet, dass das Bindmittel ein **bei Raumtemperatur** aushärtender Stoff ist.

14. Mehrschichtkörper nach Anspruch 12, **dadurch** gekennzeichnet, dass als Bindmittel ein **Epoxid mit Poly**amid als Härter verwendet wird.

15. Mehrschichtkörper nach Anspruch 12, **dadurch** gekennzeichnet, dass als Bindemittel ein Zweikomponenten Polyisozianat verwendet wird.

16. Herstellung eines Mehrschichtkörpers **nach Anspruch 11,** dadurch gekennzeichnet, dass das aus **ungereinigten,** unsortierten, petrochemischen Produkten **bestehende** Produkt (2) pulverförmig auf die Armierung aufgetragen und gesintert wird.

17. Herstellung eines Mehrschichtkörpers **nach Anspruch** 16, dadurch gekennzeichnet, dass **jeweils zwei** Mehrschichtkörper (1) durch eine Schicht aus dem Produkt (2) in pastöser Phase miteinander durch Pressen verbunden werden.

18. Verwendung der Mehrschichtkörper nach Anspruch 11 als Schalungsplatte, Bedachungsplatte, Wand- oder Bodenelementplatte oder als Eisenbahschwelle oder anderes Baumaterial sowie für die Ausstattung von Automobilen.

19. Herstellung des Mehrschichtkörpers nach Anspruch 11, dadurch gekennzeichnet, dass das Produkt (2) mit einem Bindmittel vermischt auf eine Unterlage aufgetragen wird, welche Unterlage als Armierung dient.

20. Verwendung des Mehrschichtkörpers nach Anspruch 11, als Schalungsplatte, Bedachungsplatte mit oder ohne Armierung, Wand- oder Bodenelementplatte oder als Eisenbahnschwelle.

21. Mehrschichtkörper nach einem oder mehreren der Ansprüche 1 bis 15, dadurch gekennzeichnet, dass das Produkt (2) aus etwa folgenden Anteilen besteht:

40 % Polyamid 6.6
40 % Polypropylen
10 % Viscose
10 % Hochdruck-Polyäthylen oder

80 % Polypropylen

20 % Polyamide 6.6 oder

90 % Polypropylen

10 % Viscose oder

10 % Polypropylen

60 % Polyamide 6.6, Polyamide 6 und Polyester

30 % Budadienstyrol oder

20 % Polypropylen

60 % Polyamide 6.6

20 % Hochdruck-Polyäthylen oder

50 % Polypropylen

50 % Polyester oder

10 % Viscose

70 % Polyester

20 % Polymaide 6.6 oder

40 % Polyamide 6.6

40 % Polypropylen

10 % Viscose

10 % Hochdruck-Polyäthylen oder

60 % Polypropylen

20 % Polyamide 6.6

20 % Hochdruck-Polyäthylen-Beschichtung, oder

90 % Polypropylen

10 % Hochdruck-Polyäthylen oder

50 % Polyamide 6.6

50 % Polypropylen oder

50 % Polyamide 6.6

30 % Polypropylen

10 % Viscose

10 % Hochdruck-Polyäthylen oder

70 % Polypropylen

20 % Polyamide 6.6

10 % Hochdruck-Polyäthylen oder

80 % Polypropylen

20 % Hochdruck-Polyäthylen oder

10 % Polypropylen

30 % Polyester

30 % Polyamide 6.6

30 % Hochdruck-Polyäthylen oder

70 % Polypropylen

30 % Polyamide 6.6 oder

10 % Polyester

45 % Polyamide 6.6

45 % Polypropylen oder

50 % Polyamide 6.6

20 % Polypropylen

10 % Viscose

20 % Hochdruck-Polyäthylen oder

60 % Polypropylen

30 % Polyamide 6.6

10 % Hochdruck-Polyäthylen oder

50 % Polypropylen

40 % Polyamide 6.6   und 10 % Hochdruck-Polyäthylen besteht.

FIG. 1

FIG. 2

FIG. 3

FIG. 4

1/2

0167486

FIG. 5

2/2

0167486

Europäisches
Patentamt

**EUROPÄISCHER RECHERCHENBERICHT**

**0167486**
Nummer der Anmeldung

EP 85 81 0264

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 382 108 (WOODROW CARROLL et al.) * Spalte 1, Zeilen 62-68; Spalte 2, Zeilen 59-68; Spalte 5, Zeilen 23-51 * | 1 | B 32 B 27/00 C 08 J 11/04 |
| A | | 11,15, 21 | |
| A | * Spalte 6, Zeilen 59-63 * --- | 18,20 | |
| A | US-A-3 978 263 (GÜNTHER WELLENSIEK) * Spalte 1, Zeilen 59-65 * | 1,11 | |
| A | * Spalte 8, Zeilen 1-26 * ----- | 12,13 | **RECHERCHIERTE SACHGEBIETE (Int. Cl.4)** B 32 B |

Der vorliegende Recherchenbericht wurde für alle Patentansprüche erstellt.

| Recherchenort DEN HAAG | Abschlußdatum der Recherche 18-09-1985 | Prüfer VAN THIELEN J.B. |
|---|---|---|